# EUROPEAN PATENT SPECIFICATION

(11) **EP 0 713 034 B1**
(45) Date of publication and mention of the grant of the patent: **29.07.1998**
(21) Application number: 95917365.9
(22) Date of filing: 27.04.1995
(51) Int. Cl.: F16H 59/20

(54) **SENSOR FOR DETECTING AN OVER-ACCELERATION OF VEHICLE ENGINES**
VORRICHTUNG ZUM ERKENNEN DER ÜBERBESCHLEUNIGUNG IN KRAFTFAHRZEUGMOTOREN
DETECTEUR PERMETTANT DE DETECTER UNE SURACCELERATION D'UN MOTEUR DE VEHICULE AUTOMOBILE

(30) Priority: 09.06.1994 ES 9401255
(43) Date of publication of application: 22.05.1996
(73) Proprietor: FICO CABLES, S.A., E-08191 Rubi, Barcelona (ES)
(72) Inventor: GABAS CEBOLLERO, Carlos, E-08029 Barcelona (ES)
(74) Representative: SUGRANES - VERDONCES - FERREGÜELA
(86) International application number: ES9500048
(87) International publication number: WO9533939

(56) References cited:
- DE-U- 8 434 098

## Description

### Technical field of the invention

The object of the invention is an over-acceleration detector device for automobile vehicle engines, which is of specific application on automobile vehicles provided with automatic transmission.

### Background of the invention

Widely known in the art is an extensive variety of embodiments of engine over-acceleration detector devices. The patent document DE-U-8 434 098.3 discloses a device of this kind. In summary, they are based on detection of the mechanical stress exercised upon the control cable which links the accelerator pedal with the corresponding carburettor mechanism of the vehicle engine, when that pedal is subjected to a sharply applied pressure which moves it towards the end of its travel, that is, when the accelerator pedal is pressed fully down in a sharp manner. Detection of this mechanical stress on the control cable generally gives rise to the closing of an electrical circuit which by means of a mechanism acts upon the automatic transmission and modifies, reducing it to the ratio immediately below, the gear ratio existing at the moment immediately prior to the sharp action of fully pressing down the accelerator pedal. Said devices are factory-fitted at a point of the run of the control cable intermediate between the accelerator pedal and the vehicle engine carburettor, without any break in the continuity of said steel cable. Such known devices include a main body of generally prismatic shape, a stem partially housed in the main body and which can slide inside it, a switch made up of two contacts housed in the main body, and a stem, respectively, provided with means for their electrical connection to the corresponding circuit which acts upon the automatic transmission, and one or several springs which react against the stem and against the main body in such a way that they tend to keep said switch in the open position. The stem partially housed inside the main body is traversed with slack fit by the steel cable of the control cable and is linked to the corresponding intermediate end of the control cable sheath, while the main body is mounted on a fixed point of the vehicle structure or is linked to the other intermediate end of the sheath of the steel cable.

With the over-acceleration detector device suitably installed, when the accelerator pedal is pressed fully down the longitudinal stress undergone by the control cable sheath, overcoming the reaction of the spring or springs, causes the detector device to close its switch by mutual bringing together of its stem and main body, which in turn causes the actuation of the aforesaid circuit which acts upon the automatic transmission unit. Subsequently, the elastic reaction of the spring or springs separates said main body and stem, thereby opening the switch of the detector device, which is thus left in its initial position.

In general, the known embodiments of over-acceleration detector devices such as those described present the main disadvantage of being made up of a large number of components, which increases the production cost of the device and reduces its operational reliability.

In particular, the document DE-U-8434098.3 describes an over-acceleration detector mechanism based on two spheres and in an intermediate spring whose manufacture is complex demanding a great precision to avoid failures. Besides, the electrical switch element comprises, among other elements, a friction shoe and two springs which are as well very complex in their manufacture. Finally, it should be noted that in the embodiment according to DE-U-8434098.3, the main body consists of two parts separated along a longitudinal direction and connected by special connectors. Therefore a cover is not provided for.

### Explanation of the invention

The over-acceleration detector device for automobile vehicle engines of the invention is designed to provide a solution to the disadvantages outlined above, for it is made up of a very small number of components and has very high operational reliability, largely conferred by its innovative structure.

The detector device of the invention is installed at an intermediate point of the run of the control cable which links the accelerator pedal with the vehicle engine carburettor and includes the following known parts: a hollow main body preferably made from plastic materials and of generally cylindrical shape; a stem preferably made from plastic materials and of generally cylindrical shape, which is traversed throughout its entire length, with free play, by the steel cable of the control cable and which is partially housed inside the main body; a spring whose ends rest against the main body and against the stem, respectively; a switch whose contacts, two fixed and one movable, are attached to the main body and the stem, respectively; and means for the firm union of the corresponding intermediate end of the sheath of the steel cable with the exterior stem-end-portion. At one of its ends, which is closed, the main body has an axial extension of lower diameter provided with a through opening through which the exterior stem-end-portion can be slid with sliding fit, said closed main-body-end including means of leaktightness. And, in its middle zone, the main body has an elbowed radial extension whose free end has a centred cavity to receive an electrical connector.

The detector device of the invention is characterized by the features detailed below. At its other end, which is open, the main body has coupled to it, through respective means of linkage and leaktightness, a closure cover which is prolonged to the exterior in an axial extension on which can be distinguished two adjacent portions, rear and front respectively, on which the rear portion has a cavity which emerges inside the main body provided with means for guidance of the free end of the interior stem-end-portion and which permit said end to be slid through it in both directions, and the front portion includes means of attachment, with both front and rear portions being linked by a through opening through which the steel cable of the control cable can be slid with slack fit.

Another characteristic of the detector device of the invention consists in the fact that the interior stem-end-portion has coaxially provided upon it a contact-holder of generally cylindrical shape and of relatively small thickness, which contact-holder has on its side surface a perimetral groove which is so dimensioned as to house the movable contact of the switch, said movable contact having a generally open annular shape and being of dimensions such as to remain, by elastic reaction, permanently pressed on the interior surface of the main body. The movable contact is preferably of circular cross section, although said cross section can adopt any other shape suitable to its function, such as a rectangular shape of rounded or elliptical edges, but in any case in correspondence with the cross section of the perimetral groove of the stem contact-holder.

Another characteristic of the detector device of the invention consists in the fact that the two fixed contacts of the switch, which are the same as each other, are included in the main body and arranged, with respect to the theoretical main longitudinal axis of the main body, in the same transversal plane, with each of the two fixed contacts including two arms, interior and exterior, respectively, in which the interior arm is arranged longitudinally inside the main body and projects by a relatively small amount with respect to its interior surface, while the exterior arm is arranged in the centred cavity of the elbowed radial extension of the main body.

Another characteristic of the detector device of the invention consists in the fact that both interior arms of the fixed contacts include a respective transversal projection set on the end of the interior arm facing the closed main-body-end.

Another characteristic of the detector device of the invention consists in the fact that the means for guidance of the free end of the interior stem-end-portion, arranged in the cavity of the rear portion of the cover, include a plurality of similar radial ribs arranged longitudinally and regularly distributed.

Another characteristic of the detector device of the invention consists in the fact that the means of connection of the closure cover with the main body include, on the exterior of the main body, perimetrally and regularly distributed, a plurality of retention projections of generally prismatic shape, and on the rear portion of the closure cover a perimetral shoulder from which there project longitudinally a plurality of projections which correspond in number and distribution with those of the said retention projections, said projections being provided with a through opening in which is housed with close fit a corresponding retention projection, said projections and openings being of dimensions such that the coupling of the closure cover with the main body, which is irreversible, is implemented under pressure by double elastic deformation of said projections.

Another characteristic of the detector device of the invention consists in the fact that the leaktightness means of the closure cover coupling with the main body include a perimetral seal arranged on the front face of the rear portion of the cover, which seal is submitted to compression once the cover is coupled onto the main body.

Another characteristic of the detector device of the invention consists in the fact that the leaktightness means of the closed main-body-end include on their axial extension of smaller diameter a plurality of perimetral projections, and a flexible protective cover of generally tubular shape arranged, when said cover is coupled by elastic reaction, by one of its ends to said axial extension by means of its perimetral projections, and by its other end to the intermediate end of the control cable sheath attached on the end of the exterior stem-end-portion.

In a preferred embodiment, the means of attachment provided on the front portion of the closure cover include a coaxial exterior groove on which there is a tightly fitting flexible seal, said groove and seal being of dimensions such as to permit anchorage of the device to a fixed point of the structure of the vehicle.

In another mode of embodiment, the means of attachment provided on the front portion of the closure cover include a central cavity so dimensioned as to receive and secure under pressure the corresponding intermediate end of the control cable sheath.

The detector device of the invention is supplied exfactory fitted on an intermediate point of the control cable which links the accelerator pedal with the carburettor of the vehicle engine, with the characteristic configuration of the main body closure cover, and more specifically that of its means of attachment, being the factor which determines the mode of installation of the device on the vehicle. If said closure cover is provided with the preferred means of attachment described above, the device is anchored onto a fixed point of the vehicle structure, while if the closure cover incorporates means of attachment which permit it to be firmly coupled to the corresponding intermediate end of the control cable sheath, the device works held up by the control cable itself. In either case the operation of the detector device of the invention is the same and is as now described.

As fitted in production, the spring of the detector device situates the stem in such a way that the contact-holder, and therefore the movable contact, are situated on the closed main-body-end and spaced away from the two interior arms of the fixed contacts, that is, the switch of the detector device is in open position. Once the detector device has been installed on the vehicle and the length of the sheathed portion of the cable correctly adjusted, the device is then in service conditions without need to implement any complementary operation beyond connecting it electrically to the circuit which acts on the automatic transmission unit. During driving of the vehicle, in all those manoeuvres in which the accelerator pedal is depressed smoothly the longitudinal stress which the control cable sheath exercises on the stem of the device and which tends to insert it inside the main body is insufficient for it, by overcoming the opposition of the spring arranged coaxially with respect to the stem, to be able to move far enough for the movable contact to reach the position occupied by the lower arms of the fixed contacts, which means that under these working conditions the switch of the detector device remains open. When, on the other hand, due to vehicle driving needs the accelerator pedal is depressed sharply down to the end of its travel, that is, when the pedal is pressed fully down, the longitudinal stress on the control cable sheath is of sufficient magnitude for it to overcome the opposition of the spring of the detector device which is submitted to greater compression by reduction of its length and move the stem towards the interior of the main body, sliding on the guide means of the rear portion of the closure cover, which movement is of sufficient magnitude to make the movable contact reach the position occupied by the interior arms of the fixed contacts, surpassing longitudinally the position of the transveral projections with which they are provided, thereby closing the switch of the device and, as described above, activating the circuit which acts upon the automatic transmission unit. It should be noted that, when the movable contact is superimposed upon the interior arms of the fixed contacts, which as stated above project to a relatively small extent with respect to the interior surface of the main body, this causes the diameter of the movable contact to reduce by elastic deformation, which in turn, by elastic reaction, leads to a notable increase of the pressure exercised by the movable contact on the interior surface of the main body and adequate pressure on said interior arms, which ensures closure of the switch of the device of the invention. When the driver of the vehicle then ceases said action on the accelerator pedal the spring of the device, overcoming the opposition presented by the cable sheath, moves the stem back to its initial position in the closed main-body-end in which the movable contact and the interior arms of the fixed contacts are separated, this being the position in which the switch of the detector device is open.

The characteristic configuration of the interior arms of the fixed contacts, and more specifically that of their transversal projections means that, during the operation of the detector device, when the accelerator pedal is pressed fully down the movable contact reaches the position occupied by said transversal projections, the movable contact driven by the longitudinal stressing of the control cable sheath reduces its diameter elastically and temporarily, thereby leading to a reaction on the sheath which is transmitted to the accelerator pedal, this reaction being of sufficient magnitude for the driver of the vehicle to perceive, due to variation of the pressure which the driver has to bring to bear on the pedal, that the point of over-acceleration has been reached.

### Brief description of the drawings

The drawings sheets of this specification show the over-acceleration detector device for automobile vehicle engines of the invention. In said drawings:

Figure 1 is a schematic representation which shows a mode of embodiment DT1 of the device of the invention mounted on a fixed point F of the structure of the automobile vehicle.

Figure 2 is a side section view of the mode of embodiment DT1 of the device of the invention which shows the movable contact separated from the interior arms of the fixed contacts.

Figure 3 is a side section view of the mode of embodiment DT1 of the device of the invention which shows the movable contact superimposed on the transversal projection of the interior arms of the fixed contacts.

Figure 4 is a side section view of the mode of embodiment DT1 of the device of the invention which shows the movable contact superimposed on the interior arms of the fixed contacts.

Figure 5 is a view coresponding to the section V-V of Figure 4.

Figure 6 is a schematic representation which shows another mode of embodiment DT2 of the device of the invention, fitted on the control cable which links the accelerator pedal with the carburettor of the vehicle engine.

Figure 7 is a side section view of the mode of embodiment DT2 of the device of the invention which shows the movable contact separated from the interior arms of the fixed contacts.

### Detailed description of the example of embodiment

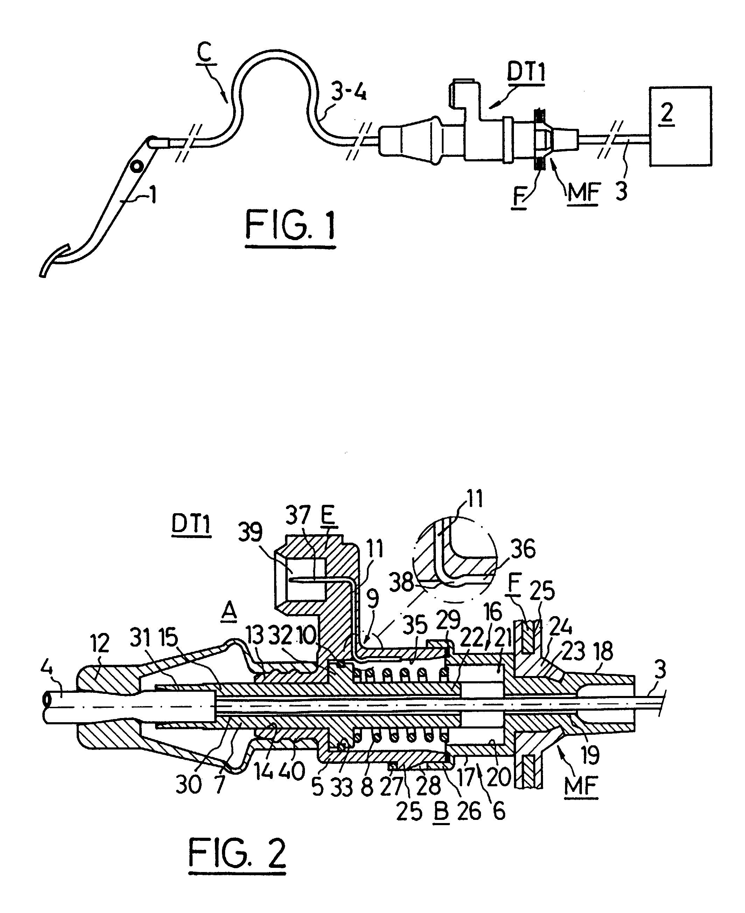

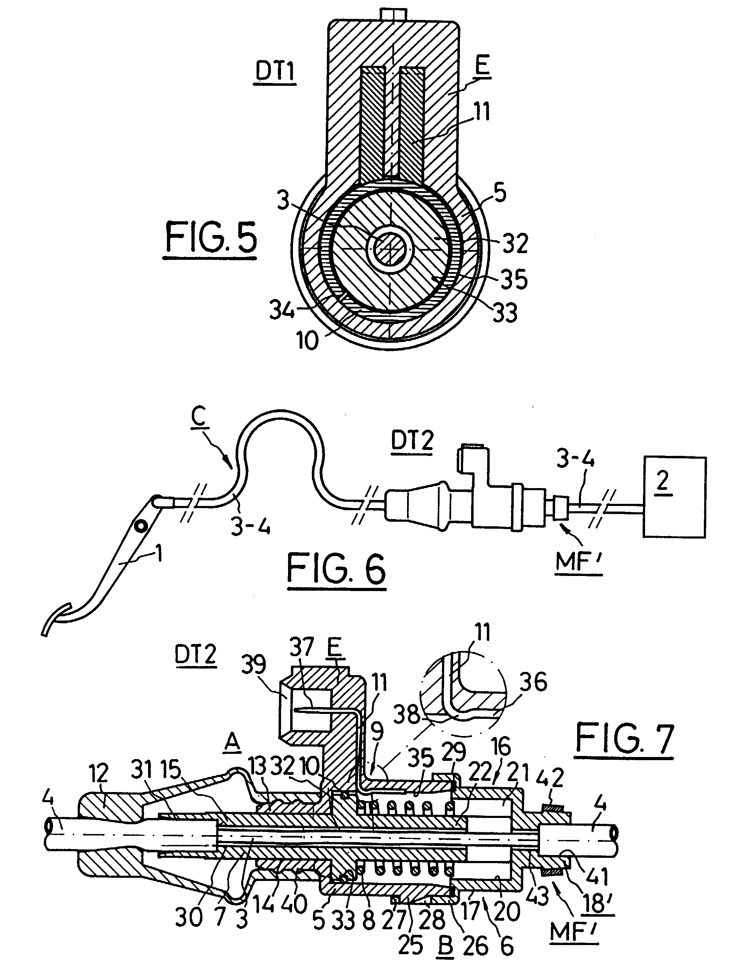

The two modes of embodiment DT1 and DT2 of the over-acceleration detector device for automobile engines of the invention, shown in the figures of the drawings sheets, which are described as an example, largely share similar constructional parts. Indeed, the two examples of embodiment DT1 and DT2 of the detector device of the invention differ from each other by the means of attachment MF and MF' utilized, respectively, that is, the detector device DT1, shown in Figures 1 to 5, includes the means of attachment MF for its anchorage to a fixed point F of the vehicle structure, while the detector device DT2, as shown in Figures 6 and 7, includes means of attachment MF' for the fitting thereof on the control cable C. For the purposes of greater clarity of outline, both in this description and in the figures of the drawings sheets, the same constructional elements are designated with the same references. The following description of said constructional parts thus refers to detector device DT1, and is by extension applicable to detector device DT2.

Figure 1 shows schematically how the detector device DT1 is mounted on a functionally suitable fixed point F of the automobile vehicle structure. In this example of application of the detector device DT1, said fixed point F is situated at an intermediate point of the run of the control cable C lying between the accelerator pedal 1 and the mechanism 2 of the automobile vehicle carburettor, and at a relatively short distance from said carburettor mechanism 2. As shown by Figures 2, 3 and 4, the control cable C includes the steel cable 3, which has no break in its continuity of run between the accelerator pedal 1 and the carburettor mechanism 2, to which it is firmly attached, and the sheath 4 which covers it, so that said steel cable 3 can be slid in both directions inside it. Figure 1 shows how two portions can be distinguished in the control cable C, a first portion of sheathed steel cable 3-4, which is the portion running between the accelerator pedal 1 and the detector device DT1, and a second portion of steel cable 3 without sheath 4 which runs between the detector device DT1 and said carburettor mechanism 2.

The following description of the detector device DT1 of the invention refers exclusively to Figures 2, 3 and 4 of the drawings sheets.

The detector device DT1 comprises the main body 5, the closure cover 6, the stem 7 partially housed inside the main body 5, the spring 8, the switch 9 made up of the movable contact 10 and the two fixed contacts 11, and the protective cover 12.

The main body 5, which is made of plastic materials, has a generally hollow cylindrical shape on the middle zone of which there projects radially the elbowed extension E. One of the ends of the main body 5, the one indicated as A, is closed, and the other end, the one indicated as B is open and has the closure cover 6 coupled to it. The closed main-body-end A prolongs into the axial extension 13 of lower diameter provided with the through-opening 14 through which the exterior stem-end-portion 15 can slide with a close fit in both directions.

The closure cover 6, which like the main body 5 is made of plastic materials, has the axial extension 16, made up of the rear 17 and front 18 portions arranged longitudinally and linked by means of the through-opening 19 through which the steel cable 3 can slide with free play. The rear portion 17 has the axial cavity 20, which emerges inside the main body 5, on which there are radially arranged the ribs 21 regularly distributed in such a way that they act as guide for the free end of the interior stem-end-portion 22. And on the front portion 18 there are the means of attachment MF which, made up of the coaxial groove 23 on which is fitted the flexible seal 24 provided with the perimetral groove 25, permit anchorage of the device DT1 to the fixed point F of the vehicle structure.

For the coupling of the closure cover 6 with the main body 5, on the open main-body-end B are the retention projections 25 arranged in regular distribution, preferably numbering three and of generally prismatic shape, while on the closure cover 6 and on the perimetral shoulder 26 of the rear portion 17 the projections 27 are longitudinally arranged, with number and distribution thereof corresponding with that of said projections 25, provided with a respective through-opening 28. The coupling of the closure cover 6 with the main body 5 is implemented under pressure and in such a way that, by double elastic deformation of the projections 27 of the closure cover 6, the retention projections 25 of the main body 5 are housed with close fit in the through-opening 28 of said projections 27. This coupling is irreversible, preventing under normal working conditions the closure cover 6 being separated from the main body 5, this being possible due to the complementary configuration given to said projections 25 and openings 28 which present faces which are respectively opposite each other and prevent the projections 25 coming out of their respective housings in the openings 28. Moreover, in order to make the coupling of the closure cover 6 with the main body 5 leaktight to prevent entry of dust or dirtiness inside the main body 5, the front side of the rear portion 17 of the closure cover 6 is provided with the perimetral seal 29 which, once the closure cover is coupled onto the main body 5, is submitted to compression.

The stem 7, which like the main body 5 and the closure cover 6 is made of plastic materials, has a generally cylindrical shape and is traversed longitudinally and centred by the opening 30 through which the steel cable 3 of the control cable C can slide with free play. The free end of the exterior stem-end-portion 15 has the centred cavity 31 of circular cross section, of dimensions such as to receive with close fit the corresponding intermediate end of the sheath 4 of the sheathed portion 3-4 of the control cable C, in such a way that the stem 7 and the sheath 4 are firmly linked. The interior stem-end-portion 22 forms the contact-holder 32 of generally cylindrical shape and relatively low thickness. The contact-holder 32 has on its side surface the groove 33 in which is housed the movable contact 10 which is made from highly flexible materials. The moving contact 10 is of generally open annular shape, for which the cut 34 shown in Figure 5 has been made in it, and is of dimensions such that, permanently and by elastic reaction, it presses on the interior surface 35 of the main body 5. In this example of embodiment the movable contact 10 has a circular cross section, though it can be- understood that said cross section of the movable contact 10 can adopt any other suitable configuration, such as an elliptical shape, without this affecting the functioning of the device of the invention.

The two fixed contacts 11, which are made from a rectangular section, are included in the main body 5 and set in the same transversal plane with respect to the theoretical main longitudinal axis of the main body 5. Each one of the two fixed contacts 11 includes two linked arms, the interior 36 and exterior 37 arms, respectively. The interior arms 36, which are arranged longitudinally, are of dimensions such that they project a relatively short distance from the interior surface 35 of the main body 5, with Figures 2, 3 and 4 showing in enlarged form how the interior arms 36 have on their ends facing the open end A of the main body 5 a respective transversal projection 38 which projects to a greater extent with respect to said interior surface 35, and the exterior arms are arranged in the centred cavity 39 of the elbowed extension E of the main body 5. Both exterior arms 37 of the fixed contacts 11 and the cavity 39 of the elbowed extent ion E are of dimensions such that they can receive the means of electrical connection needed to connect the detector device DT1 with the circuit which operates upon the automatic transmission unit; for the purposes of achieving greater clarity of outline, said means of connection and circuit have not been shown in the figures of the drawings sheets.

The spring 8 is arranged coaxially with respect to the interior stem-end-portion 22 and works permanently under compression, with one of its ends resting against the guide ribs 21 provided on the rear portion 17 of the closure cover 6, and its other end against the contact-holder 32 of the stem 7, in such a way that by elastic reaction it tends permanently to separate the movable contact 10 from the two fixed contacts 11.

Leaktightness of the closed main-body-end A is achieved by means of the protective cover 12 of generally tubular shape which is made from highly flexible material. The protective cover 12 is fixed in position by elastic reaction; at one of it ends the cover 12 presses on the axial extension 13 of lower diameter, where the perimetral projections 40 provided for the purpose prevent its position changing, under normal working conditions of the device DT1, while at its other end the cover 12 presses directly on the corresponding end of the sheath 4 of the control cable C.

As indicated above, the detector device DT1 described and shown in Figures 2, 3 and 4 includes the means of attachment MF for anchorage thereof to a fixed point F of the automobile vehicle structure, which means MF constitute the preferred mode of embodiment. The detector device DT2 shown in Figure 7 differs from the foregoing device DT1 in its means of attachment MF', which allow it to be fitted on the sheath 4 of the control cable C.

Figure 6 shows schematically how the detector device DT2 is fitted onto the control cable C at an intermediate point of its run situated between the accelerator pedal 1 and the mechanism 2 of the automobile vehicle carburettor. Said Figure 6 shows that two portions can be distinguished on the control cable C, a first portion of sheathed steel cable 3-4 running between the pedal 1 and the detector device DT2, and a second portion of sheathed cable 3-4 running between the detector device DT2 and the mechanism 2 of the carburettor. As has been described for the detector device DT1, the free end of the exterior stem-end-portion 15 of the detector device DT2 is firmly attached to the intermediate end of the sheath 4 of the sheathed portion 3-4 of the control cable C running between the pedal 1 and the detector device DT2 itself. And the means of attachment MF' arranged on the front portion 18' of the axial extension 16 of the closure cover 6 permit firm attachment of the detector device DT2 to the other intermediate end of the sheath 4 of the sheathed portion 3-4 of the control cable C running between the detector device DT2 itself and the carburettor mechanism 2. Figure 7 shows how the means of attachment MF' include the axial cavity 41, of dimensions such as to house with close fit the intermediate end of the sheath 4, and the securing flange 42 which secures the union of the sheath 4 with the front portion 18', said rear 17 and front 18' portions being linked by means of the through-opening 43 through which the steel cable 3 can slide with free play.

The two detector devices DT1 and DT2 present practically no difference from each other in respect of their functioning, so that the description which follows refers to the functioning of the detector device DT1 shown in Figures 2, 3 and 4, and is by extension applicable to the detector device DT2 shown in Figures 6 and 7.

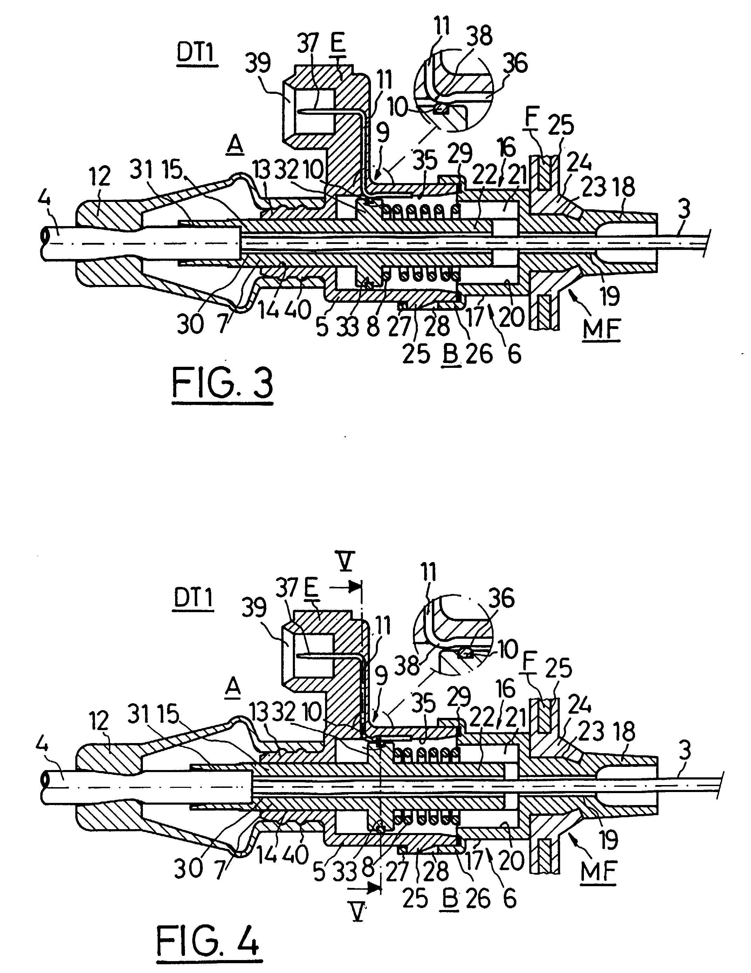

The operation of the over-acceleration detector device DT1 for automotive vehicle engines of the invention which is described as an example of embodiment is as follows: the detector device DT1 is supplied from the factory as shown in Figure 1, that is, fitted on the control cable C which links the pedal 1 with the mechanism 2; once the detector device DT1 is mounted on the vehicle as shown in Figure 1 and the length of the sheathed cable portion 3-4 adjusted, the detector device DT1 is in service conditions as shown in Figure 2, that is, with its switch 9 open due to the movable contact 10 and fixed contacts 11 being separated by the action of the spring 8; under these conditions, in all driving operations in which the accelerator pedal 1 is pressed smoothly, the longitudinal stress on the sheath 4 of the control cable C is insufficient to move the stem towards the interior of the main body 5 by overcoming the reaction of the spring 8, so that the movable contact 10 does not make contact and therefore does not make electrical connection with the two fixed contacts 11, which means that the switch 9 remains open; when driving requirements call upon the driver of the vehicle to press the accelerator pedal 1 fully down, the stress on the sheath 4 of the control cable C overcomes the reaction of the spring 8 and moves the stem 7 towards the interior of the main body 5 in so far as the movable contact 10, going beyond the position occupied by the transversal projections 38 of the interior arms 36 of the fixed contacts 11, is superimposed upon said interior arms 36 as shown in Figure 4, establishing electrical continuity between them, that is, by closing the switch 9 of the detector device DT1, which leads in turn to the action of said circuit on the automatic transmission unit; in the position shown in Figure 4, the movable contact 10 undergoes an elastic reduction of diameter with respect to the initial position shown in Figure 2, which reduction of diameter is due to the fact that said interior arms 36 of the fixed contacts 11 project with respect to the interior surface 35 of the main body 5, and this reduction of the diameter of the movable contact 10 leads to a greater elastic reaction of the latter which is conveyed in the form of high pressure on the interior arms 38 and consequently a good electrical contact; when said action on the pedal 1 ceases, the reaction of the spring 8 moves the stem 7 towards the exterior of the main body 5 separating the movable contact 10 of the interior arms 36, that is, opening the switch 9 of the detector device DT1, which thus returns to the initial position shown in Figure 2.

During the functioning described above of the detector device DT1, when the accelerator pedal 1 is suddenly pressed fully down the stem 7 is moved towards the interior of the main body 5, and when the movable contact 10 reaches the transversal projections 38 of the interior arms 36 of the fixed contacts 11, said movable contact undergoes, as shown in enlarged form in Figure 3, a temporary elastic reduction of its diameter with respect to the initial position shown in Figure 2, that is, there arises a certain temporary reaction opposing the advance of the stem 7 through the interior of the main body 5. Said reaction, which is transmitted by means of the sheath 4 of the sheathed portion 3-4 of the control cable C to the accelerator pedal 1, is of sufficient magnitude for the driver to perceive, due to variation of the pressure exercised on the pedal 1, that the point of over-acceleration of the vehicle engine has been reached.

## Claims

1. An over-acceleration detector device for automobile vehicle engines, of the type which is fitted at an intermediate point of the run of a control cable (C) which links an accelerator pedal (1) with a carburettor (2) of the vehicle engine, comprising:
a) a hollow main body (5), preferably made from plastic materials, of generally cylindrical shape;
b) a stem (7), preferably made from plastic materials, of generally cylindrical shape, which
- is traversed throughout its length with free play by a steel cable (3) of the control cable (C),
- is partially housed inside the main body (5); and
- has two end portions (15, 22);
c) a spring (8) whose ends rest against the main body (5) and the stem (7), respectively;
d) a switch (9) whose contacts, two fixed (11) and one movable (10), are attached to the main body (5) and to the stem (7), respectively;
e) means (31) to firmly attach the corresponding intermediate end of a sheath (4) of the steel cable (3) with one stem-end-portion (15) ;
f) the main body has at one end (A) an axial extension (13) of lower diameter than said main body, said extension being provided with a through-opening (14) through which said one stem-end-portion (15) can slide with sliding fit, said one main-body-end (A) including means of leaktightness (12, 40) to protect said one stem-end-portion (15) and said sheath (4) attached thereto; and
g) the main body has in its middle zone an elbowed radial extension (E) whose free end has a centred cavity (39) to receive an electrical connector, characterized in that
h) the main body has at its other end (B) coupled thereto a closure cover (6) prolonged in an axial extension (16), said closure cover (6) comprises a rear and a front portion (17 and 18) connected by a middle portion, whereby
h1) the rear portion (17) is -secured via linkage and leaktightness means (25, 27, 29) to said other main-body-end (B), the rear portion (17) has a cavity (20) which emerges inside said other main-body-end (B) and in which are provided guide means (21) so that said other stem-end-portion (22) is guided therein and permitted to slide therein in both directions,
h2) the middle or front portion includes attachment means (MF, MF') to permit attachment of said detector device to a fixed point of the vehicle structure, and
h3) the middle portion has a through opening (19, 43) through which the steel cable (3) of the control cable (C) can slide with slack fit.

2. A detector device according to Claim 1, characterized in that the other stem-end-portion (22) has coaxially provided upon it a contact-holder (32) of generally cylindrical shape and of relatively small thickness, which has on its circumferential surface a perimetral groove (33) which is so dimensioned as to house the movable contact (10) of the switch (9), said movable contact (10) having a generally open annular shape and being of dimensions such as to remain, by elastic reaction, permanently pressed on the interior surface (35) of the main body (5).

3. A detector device according to Claim 2, characterized in that the movable contact (10) is preferably of circular cross section.

4. A detector device according to any of Claims 2-3, characterized in that the two fixed contacts (11) of the switch (9), which are the same as each other, are included in the main body (5) and arranged, with respect to the theoretical main longitudinal axis of the main body (5), in the same transversal plane, with each of the two fixed contacts (11) including two arms, an interior arm (36) and an exterior arm (37), respectively, in which the interior arm (36) is arranged longitudinally inside the main body (5) and projects by a relatively small amount with respect to its interior surface (35), while the exterior arm (37) is arranged in the centred cavity (3) of the elbowed radial extension (E) of the main body (5).

5. A detector device according to any of Claims 2-4, characterized in that both interior arms (36) of the fixed contacts (11) include a respective transversal projection (38) set on the end of the interior arm (36) facing the closed main-body-end (A).

6. A detector device according to any of the preceding Claims, characterized in that the guide means (21) guiding the free end of the other stem-end-portion (22) include a plurality of similar radial ribs (21) arranged longitudinally and regularly distributed.

7. A detector device according to any of the preceding Claims, characterized in that the means of connection of the closure cover (6) with the main body (5) include, on the exterior of the main body (5), perimetrally and regularly distributed, a plurality of retention projections (25) of generally prismatic shape, and on the rear portion (17) of the closure cover (6) a perimetral shoulder (26) from which there project longitudinally a plurality of projections (27) which correspond in number and distribution with those of the said retention projections (25), said projections (27) being provided with a through-opening (28) in which is housed with close fit a corresponding retention projection (25), said projections (25) and openings (28) being of dimensions such that the coupling of the closure cover (6) with the main body (5), which is irreversible, is implemented under pressure by double elastic deformation of said projections (27).

8. A detector device according to Claim 7, characterized in that the leaktightness means of the closure cover (6) coupling with the main body (5) include a perimetral seal (29) arranged on the front face of the rear portion (17) of the cover (6), which seal (29) is submitted to compression once the cover (6) is coupled onto the main body (5).

9. A detector device according to any of the preceding Claims, characterized in that the leaktightness means (12,40) of the closed main-body-end (A) include on said axial extension (13) a plurality of perimetral projections (40) and a flexible protective cover (12) of generally tubular shape longitudinaly arranged, whereby said cover (12) is coupled by elastic reaction, by one of its ends to said axial extension (13) by means of its perimetral projections (40), and by its other end to the intermediate end of the sheath (4).

10. A detector device according to any of the preceding Claims, characterized in that the attachment means (MF) arranged on the front portion (18) of the closure cover (6) include a coaxial exterior groove (23) on which there is a tightly fitting flexible seal (24), said groove (23) and seal (24) being of dimensions such as to permit anchorage of the device to said fixed point (F) of the structure of the vehicle.

11. A detector device according to any of Claims 1-9, characterized in that the attachment means (MF') arranged on the front portion (18') of the closure cover (6) include a centred cavity (41) so dimensioned as to receive and secure under pressure the corresponding intermediate end of the control cable (C) sheath (4).

## Patentansprüche

1. Vorrichtung zum Erkennen der Überbeschleunigung für Kraftfahrzeugmotoren, die der Art nach an einem Zwischenpunkt eines Steuerseils (C) eingebaut ist, welches ein Gaspedal (1) mit einem Vergaser (2) des Fahrzeugmotors verbindet, mit:
a) einem hohlen Hauptkörper (5) mit insgesamt zylindrischer Form, der bevorzugt aus Kunststoff hergestellt ist;
b) einem Schaft (7) mit insgesamt zylindrischer Form, der bevorzugt aus Kunststoff hergestellt ist,
- über seine Länge hinweg von einem Stahlseil (3) des Steuerseils (C) mit freiem Spiel durchsetzt ist,
- teilweise im Inneren des Hauptkörpers (5) aufgenommen ist;
- zwei Endabschnitte (15, 22) aufweist;
c) einer Feder (8), deren Enden am Hauptkörper (5) beziehungsweise am Schaft (7) aufsitzen;
d) einem Schalter (9) dessen Kontakte, nämlich zwei feste (11) und ein beweglicher (10), am Hauptkörper (5) bzw. am Schaft (7) angebracht sind;
e) Mitteln (31) zur festen Anbringung des entsprechenden Zwischenendes einer Hülle (4) des Stahlseils (3) an einen Schaft-Endabschnitt (15);
f) der Hauptkörper weist an einem Ende (A) eine axiale Verlängerung (13) mit kleinerem Durchmesser als der Hauptkörper auf, wobei die genannte Verlängerung mit einer Durchgangsöffnung (14) versehen ist, durch welche der genannte eine Schaft-Endabschnitt (15) mit Gleitpassung gleiten kann, wobei das genannte eine Hauptkörperende (A) Mittel zur Leckabdichtung (12, 40) aufweist, um den genannten einen Schaft-Endabschnitt (15) und die hieran angebrachte Hülle (4) zu schützen;
g) der Hauptkörper hat in seinem mittleren Bereich eine radiale ellbogenförmige Verlängerung (E), deren freies Ende eine zentrierte Höhlung (39) zur Aufnahme eines elektrischen Verbinders aufweist, dadurch gekennzeichnet, daß
h) am anderen Ende (B) des Hauptkörpers eine Verschlußabdeckung (6) angekoppelt ist, die in einer axialen Verlängerung (16) verlängert ist, wobei die genannte Verschlußabdeckung (6) einen hinteren und einen vorderen Abschnitt (17 und 18) aufweist, die von einem Mittelabschnitt verbunden sind, wobei
h1) der hintere Abschnitt (17) über eine Verbindung und Leckabdichtungsmittel (25, 27, 29) am genanntem anderen Hauptkörperende (B) befestigt ist und der hintere Abschnitt (17) eine Höhlung (20) aufweist, die in das Innere des genannten anderen Hauptkörperendes (B) übergeht und worin Führungsmittel (21) vorgesehen sind, so daß der andere Schaft-Endabschnitt (22) hierin geführt ist und es ihm gestattet ist, hierin in beiden Richtungen zu gleiten,
h2) der mittlere oder vordere Abschnitt Anbringungsmittel (MF, MF') umfaßt, um die Anbringung der genannten Erkennungsvorrichtung an einem festen Punkt des Fahrzeugaufbaus zu gestatten, und
h3) der Mittelabschnitt eine Durchgangsöffnung (19, 43) aufweist, durch welche das Stahlseil (3) des Steuerseils (C) mit loser Passung hindurch gleiten kann.

2. Erkennungsvorrichtung nach Anspruch 1, dadurch gekennzeichnet, daß am anderen Schaft-Endabschnitt (22) koaxial ein Kontakthalter (32) mit insgesamt zylindrischer Form und verhältnismäßig geringer Dicke vorgesehen ist, der an seiner Umfangsfläche eine Umfangsnut (33) aufweist, die so bemessen ist, daß sie den beweglichen Kontakt (10) des Schalters (9) aufnimmt, wobei der genannte bewegliche Kontakt (10) eine insgesamt offene Ringform und solche Abmessungen aufweist, daß er durch elastische Gegenwirkung ständig an der Innenoberfläche (35) des Hauptkörpers (5) angedrückt bleibt.

3. Erkennungsvorrichtung nach Anspruch 2, dadurch gekennzeichnet, daß der bewegliche Kontakt (10) bevorzugt kreisförmigen Querschnitt aufweist.

4. Erkennungsvorrichtung nach einem der Ansprüche 2 bis 3, dadurch gekennzeichnet, daß die beiden festen Kontakte (11) des Schalters (9), die einander gleich sind, im Hauptkörper (5) eingeschlossen sind und in Bezug auf die theoretische Hauptlängsachse des Hauptkörpers (5) in der selben Querebene angeordnet sind, wobei jeder der beiden festen Kontakte (11) zwei Arme, nämlich einen Innenarm (36) bzw. einen äußeren Arm (37), umfaßt, bei denen der Innenarm (36) in Längsrichtung innerhalb des Hauptkörpers (5) angeordnet ist und über ein verhältnismäßig geringes Maß in Bezug auf dessen Innenoberfläche (35) übersteht, während der äußere Arm (37) in der zentrierten Höhlung (3) der ellbogenförmigen, radialen Verlängerung (E) des Hauptkörpers (5) angeordnet ist.

5. Erkennungsvorrichtung nach irgendeinem der Ansprüche 2 bis 4, dadurch gekennzeichnet, daß beide inneren Arme (36) der festen Kontakte (11) einen jeweiligen querverlaufenden Vorsprung (38) umfassen, der an dem Ende der inneren Arme (36) angeordnet ist, das dem geschlossenen Hauptkörperende (A) zugewandt ist.

6. Erkennungsvorrichtung nach irgendeinem der vorangehenden Ansprüche, dadurch gekennzeichnet, daß die Führungsmittel (21), die das freie Ende des anderen Schaft-Endabschnitts (22) führen, eine Anzahl gleichartiger, radialer Rippen (21) umfassen, die in Längsrichtung und unter regelmäßiger Verteilung angeordnet sind.

7. Erkennungsvorrichtung nach irgendeinem der vorangehenden Ansprüche, dadurch gekennzeichnet, daß die Mittel zur Verbindung des Verschlußdeckels (6) mit dem Hauptkörper (5) an der Außenseite des Hauptkörpers (5) in Umfangsrichtung und unter regelmäßiger Verteilung eine Anzahl von Haltevorsprüngen (25) mit insgesamt prismatischer Form umfassen, und am hinteren Abschnitt (17) der Verschlußabdeckung (6) eine Umfangsschulter (26), von der in Längsrichtung eine Anzahl von Vorsprüngen (27) absteht, die in Zahl und Verteilung denen der genannten Haltevorsprünge (25) entsprechen, wobei die genannten Vorsprünge (27) mit einer Durchgangsöffnung (28) versehen sind, in welcher in enger Passung ein entsprechender Haltevorsprung (25) aufgenommen ist, und wobei die genannten Vorsprünge (25) und Öffnungen (28) solche Abmessungen aufweisen, daß die Ankoppelung der Verschlußabdekkung (6) an den Hauptkörper (5), die irreversibel ist, unter Druck. durch doppelte elastische Verformung der genannten Vorsprünge (27) bewerkstelligt wird.

8. Erkennungsvorrichtung nach Anspruch 7, dadurch gekennzeichnet, daß die Leckabdichtungsmittel der Ankoppelung der Verschlußabdeckung (6) an den Hauptkörper (5) eine Umfangsdichtung (29) aufweisen, die an der Frontfläche des hinteren Abschnitts (17) der Abdeckung (6) angeordnet ist, wobei diese Dichtung (29) der Zusammendrückung unterzogen ist, nachdem erst einmal die Abdeckung (6) an den Hauptkörper (5) angekoppelt ist.

9. Erkennungsvorrichtung nach irgendeinem der vorangehenden Ansprüche, dadurch gekennzeichnet, daß die Leckabdichtungsmittel (12, 40) des geschlossenen Hauptkörperendes (A) an der genannten axialen Verlängerung (13) eine Anzahl von Umfangsvorsprüngen (40) sowie eine flexible Schutzabdeckung (12) mit insgesamt rohrförmiger Gestalt aufweisen, die in Längsrichtung angeordnet ist, wobei die genannte Abdeckung (12) durch elastische Gegenwirkung mit dem einen ihrer Enden an der axialen Verlängerung (13) mittels ihrer Umfangsvorsprünge (40) und mit ihrem anderen Ende am Zwischenende der Hülle (4) angekoppelt ist.

10. Erkennungsvorrichtung nach irgendeinem der vorangehenden Ansprüche, dadurch gekennzeichnet, daß die Anbringungsmittel (MF), die am vorderen Abschnitt (18) der Verschlußabdeckung (6) angeordnet sind, eine koaxiale Außennut (23) umfassen, an der sich eine engpassende, flexible Dichtung (24) befindet, und daß die genannte Nut (23) und die Dichtung (24) solche Abmessungen aufweisen, daß sie die Verankerung der Vorrichtung am genannten festen Punkt (F) des Fahrzeugsaufbaus gestatten.

11. Erkennungsvorrichtung nach irgendeinem der Ansprüche 1 bis 9, dadurch gekennzeichnet, daß die Anbringungsmittel (MF') am vorderen Abschnitt (18') der Verschlußabdeckung (6) angebracht sind und eine zentrierte Höhlung (41) umfassen, die so bemessen ist, daß sie das entsprechende Zwischenende der Hülle (4) des Steuerseils (C) aufnimmt und festhält.

## Revendications

1. Un dispositif de détection de suraccélération pour des moteurs de véhicules automobiles, du type monté en un point intermédiaire du trajet d'un câble de commande (C) reliant la pédale d'accélérateur (1) à un carburateur (2) du véhicule automobile, comprenant :
a) un corps principal (5) creux, réalisé de préférence en matière plastique, de forme globalement cylindrique;
b) une tige (7), réalisée de préférence en matière plastique, de forme globalement cylindrique, qui
- est traversée sur sa longueur, avec un jeu libre, par le câble en acier (3) du câble de commande (C),
- est partiellement logé à l'intérieur du corps principal (5); et
- comporte deux parties d'extrémité (15, 22);
c) un ressort (8), dont les extrémités s'appuient respectivement contre le corps principal (5) et la tige (7);
d) un interrupteur (9), dont les contacts, deux (11) étant fixes et un (10) étant mobile, sont fixés au corps principal (5) et à la tige (7), respectivement;
e) des moyens (31), conçus pour attacher de façon rigide l'extrémité intermédiaire correspondante d'une gaine (4) du câble en acier (3) à une partie d'extrémité de tige (15);
f) le corps principal ayant, à une extrémité (A), un prolongement ou une extension axiale (13) de diamètre inférieur à celui dudit corps principal, ladite extension étant pourvue d'une ouverture traversante (14), à travers laquelle ladite une partie d'extrémité de tige (15) peut coulisser avec un montage coulissant, ladite extrémité de corps principal (A) comprenant des moyens d'étanchéité aux fuites (12, 40), conçus pour protéger ladite une partie d'extrémité de tige (15) et ladite gaine (4) lui étant fixée; et
g) le corps principal comportant, dans sa zone médiane, une extension radiale (E) coudée, dont l'extrémité libre comporte une cavité centrée (39) destinée à recevoir un connecteur électrique, caractérisé en ce que
h) le corps principal comporte, à son autre extrémité (B), lui étant couplé, un couvercle de fermeture (6), prolongé par une extension axiale (16), ledit couvercle de fermeture (6) comprenant une partie arrière et une partie avant (17 et 18) connectées par une partie médiane, de manière que
h1) la partie arrière (17) soit fixée, par l'intermédiaire de moyens de liaison et d'étanchéité aux fuites (25, 27, 29) à ladite autre extrémité de corps principal (B), la partie arrière (17) comportant une cavité (20) émergeant à l'intérieur de ladite autre extrémité de corps principal (B) et dans laquelle sont prévus des moyens de guidage (21), de manière que ladite autre partie d'extrémité de tige (22) y soit guidée et autorisée à y coulisser dans les deux sens,
h2) la partie médiane ou avant comprenne des moyens de fixation (MF, MF'), conçus pour permettre la fixation dudit dispositif de détection en un point fixe de la structure du véhicule, et
h3) la partie médiane comporte une ouverture traversante (19, 43) à travers laquelle le câble en acier (3) du câble de commande (C) peut coulisser avec un ajustement non serré.

2. Un dispositif de détection selon la revendication 1, caractérisé en ce que l'autre partie d'extrémité de tige (22) présente, placée coaxialement sur elle, un support de contact (32) de forme globalement cylindrique et d'épaisseur relativement petite, qui a sur sa surface circonférentielle une gorge périphérique (33) dimensionnée pour loger le contact mobile (10) de l'interrupteur (9), ledit contact mobile (10) ayant une forme générale annulaire ouverte et ayant des dimensions permettant de rester, sous l'effet de la réaction élastique, pressé de façon permanente sur la surface intérieure (35) du corps principal (5).

3. Un dispositif de détection selon la revendication 1, caractérisé en ce que le contact mobile (10) est de préférence de section transversale circulaire.

4. Un dispositif de détection selon l'une quelconque des revendications 2-3, caractérisé en ce que les deux contacts fixes (11) de l'interrupteur (9), qui sont identiques entre eux, sont inclus dans le corps principal (5) et agencés, par rapport à l'axe longitudinal principal théorique du corps principal (5), dans le même plan transversal, chacun des deux contacts fixes (11) comprenant deux bras, un bras intérieur (36) et un bras extérieur (37), respectivement, dans lequel le bras intérieur (36) est agencé longitudinalement à l'intérieur du corps principal (5) et fait saillie, d'une distance relativement petite, par rapport à sa surface intérieure (35), tandis que le bras extérieur (37) est agencé dans la cavité centrée (3) de l'extension radiale (E) coudée du corps principal (5).

5. Un dispositif de détection selon l'une quelconque des revendications 2-4, caractérisé en ce que les deux bras intérieurs (36) des contacts fixes (11) comprennent une saillie transversale (38) respective, placée sur l'extrémité du bras intérieur (36) tourné vers l'extrémité de corps principal (A) fermée.

6. Un dispositif de détection selon une ou plusieurs des revendications précédentes, caractérisé en ce que les moyens de guidage (21), assurant le guidage de l'extrémité libre de l'autre partie d'extrémité de tige (22), comprennent une pluralité de nervures radiales (21) analogues, agencées longitudinalement et réparties régulièrement.

7. Un dispositif de détection selon une ou plusieurs des revendications précédentes, caractérisé en ce que les moyens de connexion du couvercle de fermeture (6) au corps principal (5) comprennent, à l'extérieur du corps principal (5), en position périphérique et réparties régulièrement, une pluralité de saillies de retenue (25) de forme globalement prismatique, et, sur la partie carrière (17) du couvercle de fermeture (6), un épaulement périphérique (26) d'où font saillie longitudinalement une pluralité de saillies (27) correspondant, en nombre et en répartition, à celles desdites saillies de retenue (25), lesdites saillies (27) étant pourvues d'une ouverture traversante (28) dans laquelle est logé, avec un ajustement serré, une saillie de retenue (25) correspondante, lesdites saillies (25) et ouvertures (28) étant de dimensions telles que l'accouplement du couvercle de fermeture (6) avec le corps principal (5), qui est irréversible, soit mis en oeuvre sous pression, par une double déformation élastique desdites saillies (27).

8. Un dispositif de détection selon la revendication 1, caractérisé en ce que les moyens d'étanchéité aux fuites du couvercle de fermeture (6) s'accouplant au corps principal (5) comprennent un joint d'étanchéité périphérique (29), agencé sur la surface avant de la partie arrière (17) du couvercle (6), le joint d'étanchéité (29) étant soumis à une compression, une fois que le couvercle (6) est couplé sur le corps principal (5).

9. Un dispositif de détection selon une ou plusieurs des revendications précédentes, caractérisé en ce que les moyens d'étanchéité aux fuites (12, 40) de l'extrémité de corps principal (A) fermée comprennent, sur ladite extension axiale (13), une pluralité de saillies périphérique (40) et un couvercle protecteur (12) flexible de forme globalement tubulaire étant disposé longitudinalement, de manière que ledit couvercle (12) soit couplé par réaction élastique, par l'une de ses extrémités, à ladite extension axiale (13), au moyen de ses saillies périphériques (40) et, par son autre extrémité, à l'extrémité intermédiaire de la gaine (4).

10. Un dispositif de détection selon une ou plusieurs des revendications précédentes, caractérisé en ce que les moyens de fixation (MF) disposés sur la partie avant (18) du couvercle de fermeture (6) comprennent une gorge extérieure coaxiale (23) sur laquelle est prévu un joint d'étanchéité flexible (24) à montage serré, ladite gorge (23) et ledit joint d'étanchéité (24) étant de dimensions telles qu'ils permettent l'ancrage du dispositif audit point fixe (F) de la structure du véhicule.

11. Un dispositif de détection selon l'une quelconque des revendications 1-9, caractérisé en ce que les moyens de fixation (MF') disposés sur la partie avant (18') du couvercle de fermeture (6) comprennent une cavité centrée (41), de dimensions qui permettent de recevoir et de fixer sous pression l'extrémité intermédiaire correspondante du câble de commande (C) de la gaine (4).
